# EUROPEAN PATENT APPLICATION

(11) **EP 2 086 224 A2**
(43) Date of publication of application: **05.08.2009**
(21) Application number: 09000813.7
(22) Date of filing: 21.01.2009
(51) Int. Cl.: H04N 5/74

(54) **Laser projector**

(30) Priority: 24.01.2008 JP 2008013864
(71) Applicant: Funai Electric Co., Ltd., Daito-shi, Osaka 574-0013 (JP)
(72) Inventor: Hirano, Atsuya, Osaka 574-0013 (JP); Nagashima, Kenji, Osaka 574-0013 (JP); Nishioka, Ken, Osaka 574-0013 (JP); Chikaoka, Atsuhiko, Osaka 574-0013 (JP)
(74) Representative: Grünecker, Kinkeldey, Stockmair & Schwanhäusser Anwaltssozietät

(57) **Abstract**

Disclosed is a laser projector to display an image having a predetermined number of gradations by a combination of n division gradations, each being set with a maximum luminance, comprising: a storage section to store a luminance value of each of the gradations, and division signals being associated with each other, each of the division signals corresponding to an intensity of each of the division gradations, and the division gradations being combined with each other to represent the luminance value; a determination section to determine the division signal of each of the division gradations corresponding to the luminance value of each pixel which constitutes the image; and a signal output section to divide a display period of the each pixel into n intervals, and to sequentially output the division signal of each of the division gradations to a light source in a predetermined order, in each of the intervals.

## Description

### BACKGROUND OF THE INVENTION

### 1. Field of the Invention

The present invention relates to a laser projector to perform a gradation display according to the intensity of a light from a laser light source.

### 2. Description of Related Art

Conventionally, a projector using a laser as the light source thereof has been developed as an image display apparatus. As a projector of this kind, a projector has been known that performs a gradation display by adding an electric current according to a display gradation to a laser medium to control the intensity of a light. However, since the electric current-light output characteristic of a laser is nonlinear, the aforesaid projector has a problem in which the projector cannot display accurate luminance according to an electric current and the luminance disperses to make it impossible to perform an accurate gradation display.

Accordingly, for example, Japanese Patent Application Laid-Open Publication No. 2001-175216 discloses a high gradient display technique for a liquid crystal display apparatus which is also an image display apparatus. The high gradient display technique equally divides a display period of an image into eight intervals each having an equal time width, and amplifies or attenuates the luminance of a light source in an interval k (0 ≤ k ≤ 7) to be proportional to 1/2^{k}. The high gradient display technique further turns off or on a two-dimensional light modulation section, such as a liquid crystal panel, in each interval to thereby realize a linear 256-gradation display.

Moreover, a laser projector has been known that further divides the display region of a pixel into a plurality of regions and radiates a laser light to each of the divided regions, in addition to the time-sharing of a display period of a pixel described above. However, since this kind of laser projector performing the time-sharing or the region division generally radiates a laser light having the maximum luminance to the left end region in each pixel and gradually weakens the luminance of the laser light in order as the laser light moves to the right side in the pixel, the laser projector has a problem in which the pixel is displayed in a gradation of the luminance being higher on the left side and being lower on the right side as a whole and consequently the luminance in the pixel is not uniform to deteriorate the image quality of the pixel.

### SUMMARY OF THE INVENTION

The present invention is directed to achieve the uniformization of the luminance in a pixel to improve the image quality of a laser projector that divides the display period of one pixel into a plurality of intervals and divides the pixel into a plurality of regions to perform a gradation representation.

According to an aspect of the present invention, there is provided a laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in a predetermined order which is other than an order in which the intensity is arranged by an ascending order or by a descending order, in each of the intervals.

According to another aspect of the present invention, there is provided a laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in an order in which the intensity is randomly arranged, in each of the intervals.

According to still another aspect of the present invention, there is provided a laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in a predetermined order which is other than an order in which the intensity is arranged by an ascending order or by a descending order, in each of the intervals, wherein
the intensity of each of the division gradations is a 2 factorial value, the intensities having a different value from one another, and wherein
the signal output section divides at least one of the intervals into a display interval and a non-display interval, and outputs the division signal of each of the division gradations, determined by the determination section, only in the display interval.

According to still another aspect of the present invention, there is provided a laser projector to display an image having a predetermined number of gradations by a combination of n division gradations, each division gradation being set with a maximum luminance, where n is an integer of not less than 3, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source, in each of the intervals, wherein
in each of the division gradations, the division signals of a plurality of intensities are set, and the intensity of the division signal of each of the division gradations is set so as to correspond to the luminance value of the each pixel.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a block diagram illustrating the configuration of the principal part of a laser projector of a first embodiment;

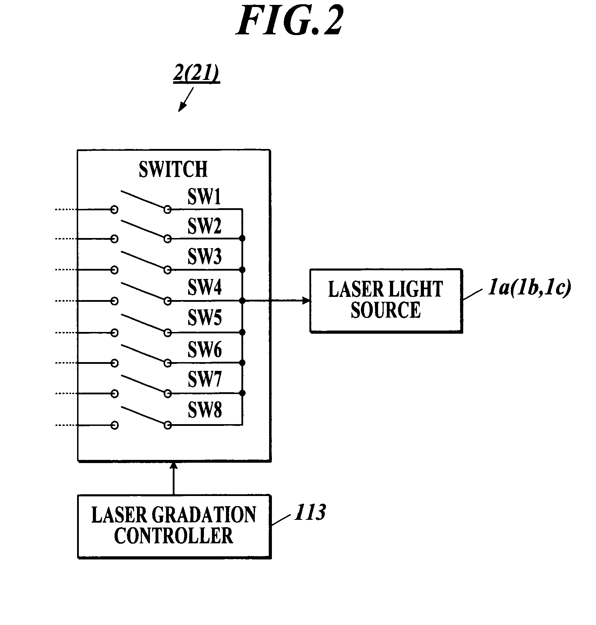

FIG. 2 is a diagram illustrating a switch section;
FIG. 3 is a graph schematically illustrating output signals output to a laser light source in one display period of a pixel in the laser projector of the first embodiment;
FIG. 4 is a diagram schematically illustrating each interval divided into a display interval And a non-display interval In a laser projector of a first modification;
FIG. 5 is a graph schematically illustrating output signals output to a laser light source in one display period of a pixel in the laser projector of the first modification;
FIG. 6 is a block diagram illustrating the configuration of the principal part of a laser projector of a second embodiment;
FIG. 7 is a graph schematically illustrating output signals output to a laser light source in one display period of a pixel in the laser projector of the second embodiment;
FIG. 8 is a graph schematically illustrating output signals output to the laser light source in one display period of a pixel in the laser projector of the second embodiment;
FIG. 9 is a graph schematically illustrating output signals output to a laser light source in one display period of a pixel in a laser projector of a second modification;
FIG. 10 is a block diagram illustrating the configuration of the principal part of a laser projector of a third embodiment;
FIG. 11 is a diagram illustrating a switch interval Equipped to the laser projector of the third embodiment; and
FIG. 12 is a diagram illustrating a gradation memory equipped to the laser projector of the third embodiment.

### DETAILED DESCRIPTION OF THE PREFERRED EMBODIMENTS

In the following, the embodiments of the present invention will be described with reference to the accompanying drawings. Incidentally, the scope of the present invention is not limited to the shown examples.

### (First Embodiment)

First, a laser projector of a first embodiment of the present invention will be described.

In the first embodiment, for example, a laser projector 100 to display an image by 256 (predetermined number) gradations is exemplified and described as a laser projector to display an image of a predetermined number of gradations.

Moreover, in the present laser projector 100, the number n is supposed to be eight, and the 256 gradations are divided into eight (n) division gradations to each of which the maximum luminance is individually set. Moreover, the display period of each pixel is supposed to be divided into eight (n) intervals. Incidentally, in the following description, the eight division gradations will be referred to as "division gradations 1-8," in which the division gradation having the lowest maximum luminance is set to the "division gradation 1," and the division gradation having the highest maximum luminance is set to the "division gradation 8." Furthermore, the eight intervals are referred to as "intervals A-H."

Then, in each of the divided eight intervals A-H, division signals corresponding to the respective eight division gradations 1-8 are output, and the 256 gradations are represented by the combinations of these eight division gradations 1-8.

Incidentally, the number of gradations that can be represented by the laser projector of the present invention, the division number of the gradations, and the division number of the display period of a pixel are arbitrary.

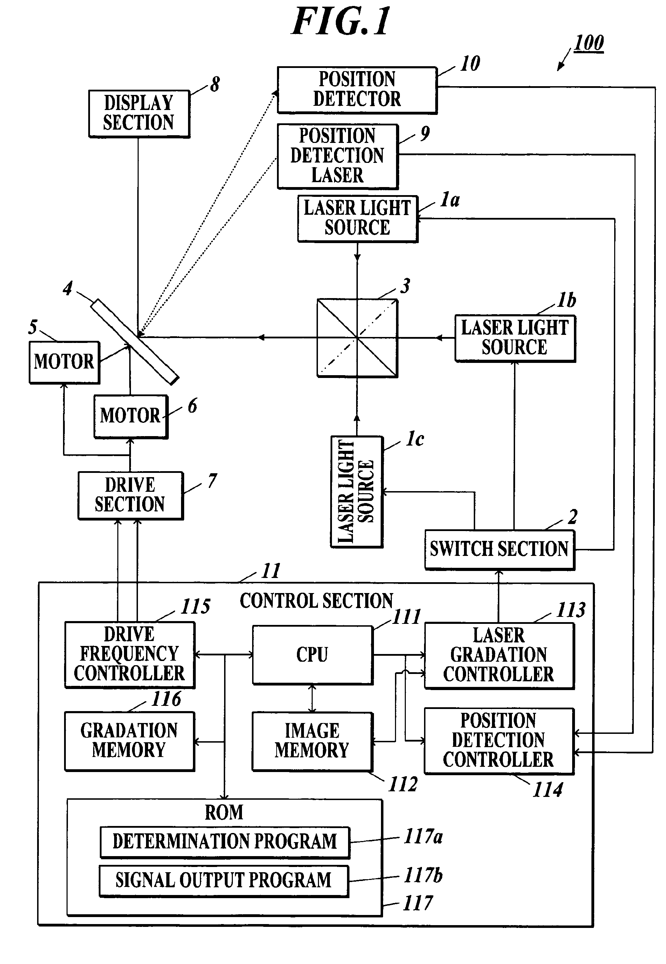

FIG. 1 is a block diagram showing the configuration of the principal part of the laser projector 100 of the first embodiment.

As shown in FIG. 1, the laser projector 100 of the first embodiment includes three laser light sources (light sources) 1a, 1b, and 1c, a switch section 2, a half mirror 3, a scanner mirror 4, motors 5 and 6, a drive section 7, a display section 8, a position detection laser 9, a position detector 10, a control section 11, and the like.

The laser light sources 1a, 1b, and 1c are, for example, semiconductor lasers, and emit lights of a red (R), a green (G), and a blue (B), respectively.

The switch section 2 includes eight switches SW1-SW8 to output division signals having previously set intensities, and turns on and off the respective switches SW1-SW8 in conformity with the control of a laser gradation controller 113 (described below) in each of the intervals A-H, which are divided ones of one display period of a pixel, thereby outputs the division signals to the laser light sources 1a, 1b, and 1c.

The half mirror 3 multiplexes the laser lights from the laser light sources 1a, 1b, and 1c to output the multiplexed light to the scanner mirror 4.

The position detector 10 detects the rotation angle of the scanner mirror 4 and outputs a position detection signal to a position detection controller 114.

The scanner mirror 4 is a galvanometer mirror scannable in two axes in a horizontal direction and a vertical direction, or the like, and is driven at a high speed in the horizontal and vertical directions by the motors 5 and 6 driven by the drive section 7. The laser lights emitted from the laser light sources 1a, 1b, and 1c are made to scan the display section 8 with the scanner mirror 4.

The control section 11 includes, for example, a central processing unit (CPU) 111, an image memory 112, the laser gradation controller 113, the position detection controller 114, a drive frequency controller 115, a gradation memory 116 as a storage section, a read only memory (ROM) 117, and the like.

The CPU 111 executes various programs stored in the ROM 117 according to the input signals input from the respective sections of the laser projector 100, and outputs output signals to the respective sections on the basis of the executed programs, thereby performing the integrated control of the whole operation of the laser projector 100.

The laser gradation controller 113 generates the division signals of the division gradations 1-8 corresponding to the respective colors of R, G, and B for every pixel on the basis of an image signal read from the image memory 112 and on the values of the division signals read from the gradation memory 116 to output the generated division signals to the laser light sources 1a, 1b, and 1c.

The position detection controller 114 outputs a control signal for controlling the scanner mirror 4 to the drive section 7 on the basis of the position detection signal fed back from the position detector 10, thereby performing the position control of the scanner mirror 4.

The drive frequency controller 115 outputs a drive frequency for driving the scanner mirror 4.

The gradation memory 116 associates the luminance values of the respective 256 gradations and the values of the division signals corresponding to the intensities of the individual division gradations, which division signals are combined with each other for representing the respective 256 luminance values, and stores the associated luminance values and the values of the division signals.

The ROM 117 includes a program storage area, and concretely, stores a determination program 117a, a signal output program 117b, and the like.

The determination program 117a is a program, for example, for allowing the CPU 111 to realize the function of referring to the gradation memory 116, thereby determining the division signal of the individual division gradation corresponding to the luminance value of each pixel constituting an image.

The CPU 111 executes this determination program 117a for functioning as a determination section.

The signal output program 117b is a program, for example, for allowing the CPU 111 to realize the function of dividing the display period of each pixel into eight (n) intervals and to sequentially output each of the division signals of the individual division gradations determined by the determination program 117a in each of the intervals to the laser light sources 1a, 1b, and 1c in a predetermined order other than the order by which intensities are arranged in an ascending order or a descending order.

The CPU 111 executes this signal output program 117b, thereby functions as a signal outputting section.

To put it concretely, the CPU 111 reads an image signal from the image memory 112 to obtain the luminance value of each pixel. Then, the CPU 111 determines the respective division signals of the division gradations 1-8 corresponding to the obtained luminance values on the basis of the gradation memory 116.

Furthermore, in each of the intervals A-H, which are divided ones of the one display period of a pixel, the CPU 111 makes the laser gradation controller 113 turn on and off the switches SW1-SW8 corresponding to the division signals to be output, and makes the laser gradation controller 113 output the respective division signals to the laser light sources 1a, 1b, and 1c.

In the laser projector 100 of the first embodiment, the intensity of each division gradation output in each of the eight intervals A-H is set to a 2 factorial value of a respectively different value here. To put it concretely, they are 2⁰ (= 1), 2¹ (= 2), 2² (= 4), 2³ (= 8), 2⁴ (= 16), 2⁵ (= 32), 2⁶ (= 64), and 2⁷ (= 128).

Furthermore, in the laser projector 100 of the first embodiment, the division signals of the individual division gradations output in each of the intervals A-H are sequentially output in a predetermined order except the order by which their intensities are arranged in an ascending order (that is, 1, 2, 4, 8, 16, 32, 64, and 128) or a descending order (that is, 128, 64, 32, 16, 8, 4, 2, and 1).

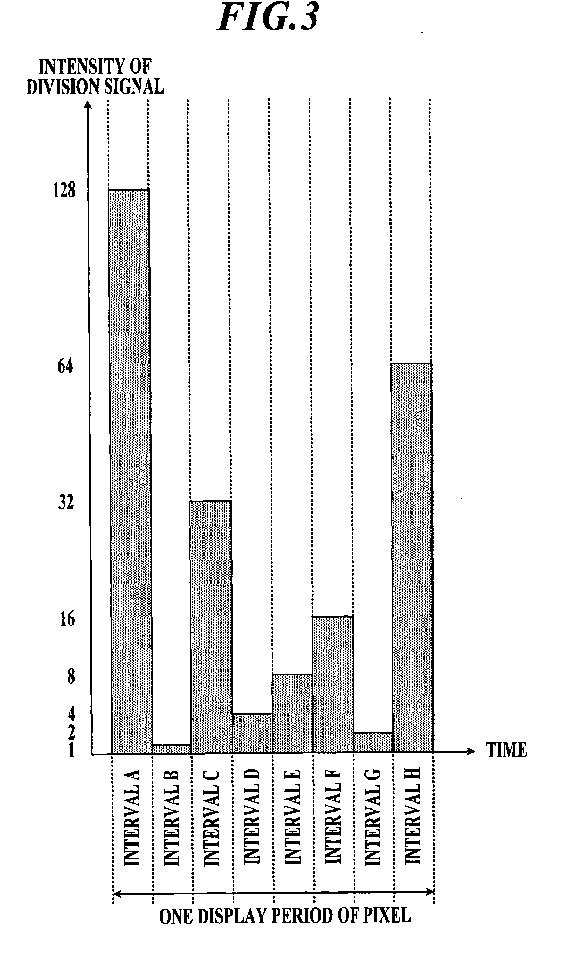

As an example, as shown in FIG. 3, in each of the intervals A-H, the division signals corresponding to the respective division gradations are supposed to be output in the order of division gradation 8 (luminance value 128) → division gradation 1 (luminance value 1) → division gradation 6 (luminance value 32) → division gradation 3 (luminance value 4) → division gradation 4 (luminance value 8) → division gradation 5 (luminance value 16) → division gradation 2 (luminance value 2) → division gradation 7 (luminance value 64).

That is, the switch section 2 is configured so that the switch SW8 may output a division signal of the luminance value 128, that the switch SW7 may output a division signal of the luminance value 1, that the switch SW6 may output a division signal of the luminance value 32, that the switch SW5 may output a division signal of the luminance value 4, that the switch SW4 may output a division signal of the luminance value 8, that the switch SW3 may output a division signal of the luminance value 16, that the switch SW2 may output a division signal of the luminance value 2, and that the switch SW1 may output a division signal of the luminance value 64. The laser projector 100 outputs the respective division signals in the respective intervals A-H by turning on and off the switches SW1-SW8 from the switch SW8 in order.

Then, for example, when CPU 111 scans the pixel of the luminance value 255, then the CPU 111 turns on the switch SW8 in the interval A to output the division signal of the division gradation 8 (luminance value 128); the CPU 111 turns on the switch SW7 in the interval B to output the division signal of the division gradation 1 (luminance value 1); the CPU 111 turns on the switch SW6 in the interval C to output the division signal of the division gradation 6 (luminance value 32); the CPU 111 turns on the switch SW5 in the interval D to output the division signal of the division gradation 3 (luminance value 4); the CPU 111 turns on the switch SW4 in the interval E to output the division signal of the division gradation 4 (luminance value 8); the CPU 111 turns on the switch SW3 in the interval F to output the division signal of the division gradation 5 (luminance value 16); the CPU 111 turns on the switch SW2 in the interval G to output the division signal of the division gradation 2 (luminance value 2); the CPU 111 turns on the switch SW1 in the interval H to output the division signal of the division gradation 7 (luminance value 64); and the CPU 111 turns off the other switches in each of the intervals A-H, thereby scans the pixel of the luminance value 255.

Moreover, for example, when the CPU 111 scans a pixel of the luminance value 192, then the CPU 111 turns on the switch SW8 in the interval A to output the division signal of the division gradation 8 (luminance value 128); the CPU 111 dos not output any division signals in the intervals B-G; the CPU 111 turns on the switch SW1 in the interval H to output the division signal of the division gradation 7 (luminance value 64); and the CPU 111 turns off the other switches in each of the intervals A-H, thereby scans the pixel of the luminance value 192.

Moreover, for example, when the CPU 111 scans the pixel of the luminance value 129, then the CPU 111 turns on the switch SW8 in the interval A to output the division signal of the division gradation 8 (luminance value 128); the CPU 111 turns on the switch SW7 in the interval B to output the division signal of the division gradation 1 (luminance value 1); the CPU 111 does not output any division signals in the intervals C-H; and the CPU 111 turns off the other switches in each of the intervals A-H, thereby scanning the pixel of the luminance value 129.

Moreover, for example, when the CPU 111 scans the pixel of the luminance value 3, then the CPU 111 does not outputs any division signals in the interval A; the CPU 111 turns on the switch SW7 in the interval B to output the division signal of the division gradation 1 (luminance value 1); the CPU 111 does not output any division signals in the intervals C-F; the CPU 111 turns on the switch SW2 in the interval G to output the division signal of the division gradation 2 (luminance value 2); the CPU 111 does not output any division signals in the interval H; and the CPU 111 turns off the other switches in each of the intervals A-H, thereby scanning the pixel of the luminance value 3.

Incidentally, although the order of the intensities of the respective division gradations output in the respective intervals A-H is arbitrary, it is desirable to set the order to the one by which a division signal of higher luminance adjoins to a division signal of lower luminance (that is, the division signals having the intensities different from each other largely adjoin to each other) in order to achieve the uniformization of luminance in a pixel.

Moreover, as described above, it is not necessary for the laser projector 100 to be configured so as to turn on and off the switches SW1-SW8 in order from the switch SW8 in the intervals A-H, and the laser projector 100 may be configured to turn on and off the switches SW1-SW8 in the predetermined order other than the ascending order and the descending order, thereby outputting the division signals in the above-mentioned order (that is, the predetermined order other than the order by which the intensities of the division signals are arranged in the descending or ascending order).

According to the laser projector 100 of the first embodiment described above, the gradation memory 116 associates the luminance values of the predetermined number of respective gradations with the division signals corresponding to the intensities of the individual division gradations, which division signals are combined with each other in order to represent the luminance values, and stores the luminance values and the division signals therein; the CPU 111 executes the determination program 117a to refer to the gradation memory 116, thereby determining the division signals of the individual division gradations corresponding to the luminance values of the respective pixels constituting an image; and the CPU 111 executes the signal output program 117b, thereby dividing the display period of each pixel into n intervals, and sequentially outputting each of the division signals of the individual division gradations determined by means of the determination program 117a in each of the n intervals to the light sources in the predetermined order other than the order by which the intensities are arranged in the ascending order or the descending order. Moreover, the intensities of the individual division gradations are 2 factorial values of values different from one another.

That is, since the division signals of the respective division gradations output in the n respective intervals are not output in the order of the descending order or the ascending order of the intensities, the deviation of the luminance in each pixel is prevented, and the luminance in each pixel becomes more uniform. Consequently, in the laser projector 100 which divides the display period of a pixel into a plurality of intervals and divides the pixel into a plurality of regions, thereby performing a gradation representation, the uniformization of the luminance in each pixel can be achieved, and the image quality of the laser projector 100 can be improved.

Moreover, when the whole of a pixel is scanned with a light without performing the time-sharing of the display period of each pixel to render each of the pixels, then the signal of the electric current value corresponding to each of the gradations becomes necessary, and the accuracy of an electric current generation circuit is required. Moreover, the nonlinearity of the electric current-light output characteristic of a laser is required to be added into consideration, and consequently the control becomes complicated. On the other hand, since the present laser projector 100 only needs to generate the division signals corresponding to the respective division gradations to be output in the respective intervals, which are severally divided display period of a pixel, and is not required to perform the control considering the electric current-light output characteristic of the laser, the configuration and control of the electric current generation circuit become easy. That is, when the display period of a pixel is divided into eight intervals A-H and the division signals of 2 factorial values (2⁰ - 2⁷), which are different from one another, are sequentially output in each of the eight intervals A-H in the present laser projector 100, then it is sufficient only to generate the division signals of the eight gradations, and consequently 256 gradations can be represented with a simple configuration.

### (First Modification)

Next, a laser projector of a first modification will be described.

In the laser projector of the first modification, one or a plurality of arbitrary intervals among the eight divided intervals A-H are divided into a display interval and a non-display interval, and division signals are output only in the display interval.

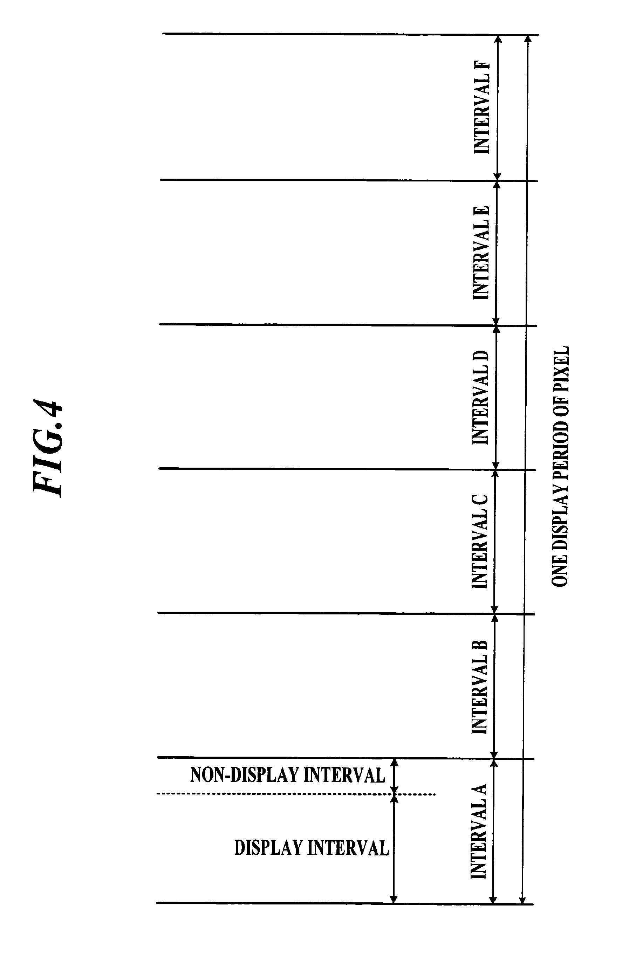

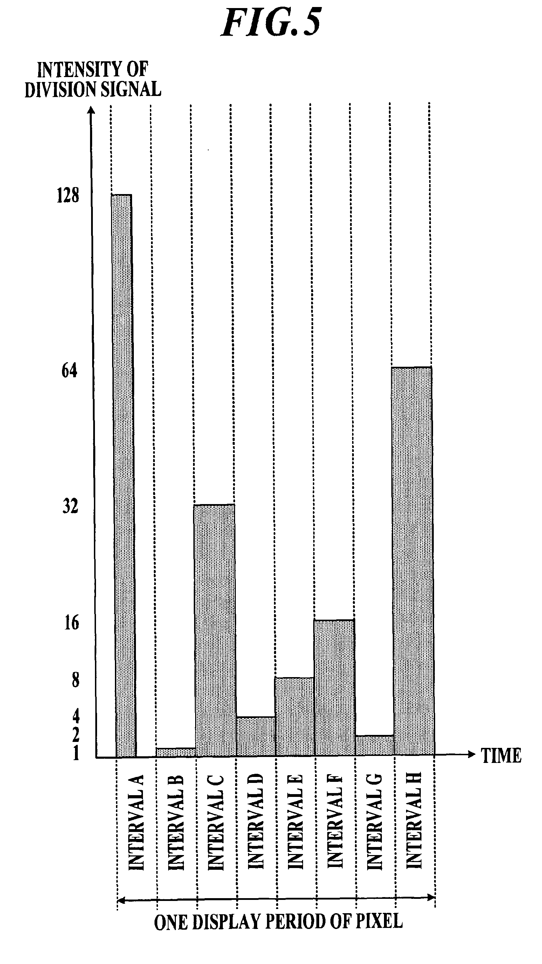

In the laser projector of the first modification, for example, similarly to the laser projector 100 of the first embodiment, in each of the divided eight intervals A-H, the division signals of the individual division gradations are sequentially output in the order of a predetermined order (that is, the luminance value 128 → the luminance value 1 → the luminance value 32 → the luminance value 4 → the luminance value 8 → the luminance value 16 → the
luminance value 2 → the luminance value 64) other than the order by which the intensities of the division signals are arranged in the ascending order or the descending order. Then, for example, as shown in FIG. 4, the interval A, having the highest luminance value of the division signal to be output, is divided into the display interval and the non-display interval, and as shown in FIG. 5, the division signal is output only during the display interval in the interval A. The length of the non-display interval is set according to the amount of an overshoot that has been estimated in advance, and the overshoot can be complemented.

Incidentally, another interval in which an overshoot can be caused may be divided into a display interval and a non-display interval.

According to the laser projector of the first modification, an interval is divided into a display interval and a non-display interval, and the division signal of an individual division gradation determined by the execution of the determination program 117a is output only in the display interval. Consequently, harmful influences owing to an overshoot, which can be generated at the time of the scanning of each pixel, can be prevented.

### (Second Embodiment)

Next, a laser projector of a second embodiment of the present invention will be described.

In the second embodiment, similarly to the first embodiment, a laser projector 200 to display an image by 256 (predetermined number) gradations will be described as a laser projector to display an image of a predetermined number of gradations. Moreover, in the present laser projector 200, the number n is set to be eight, and the 256 gradations are divided into eight (n) division gradations to each of which the maximum luminance is individually set. Moreover, the display period of each pixel is set to be divided into eight (n) intervals. Incidentally, in the following description, the components duplicated with those of the first embodiment are denoted by the same reference numbers as those in the first embodiment, and their descriptions are omitted.

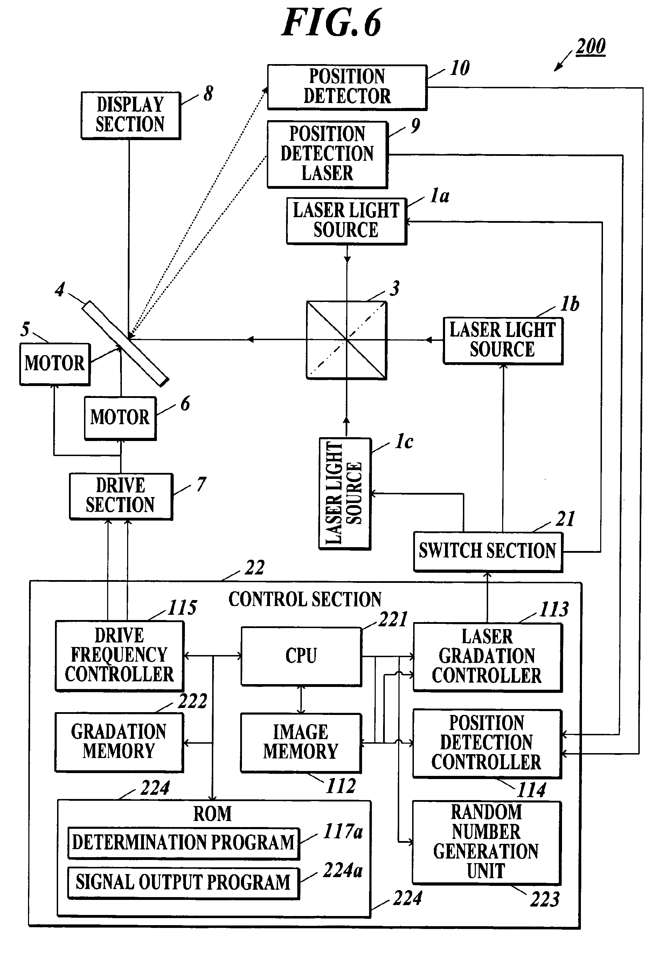

FIG. 6 is a block diagram showing the configuration of the principal part of the laser projector 200 of the second embodiment.

As shown in FIG. 6, the laser projector 200 of the second embodiment includes the three laser light sources 1a, 1b, and 1c, a switch section 21, the half mirror 3, the scanner mirror 4, the motors 5 and 6, the drive section 7, the display section 8, the position detection laser 9, the position detector 10, a control section 22, and the like.

The switch section 21 includes eight switches SW1-SW8 to output division signals having previously set intensities, and turns on and off the respective switches SW1-SW8 in conformity with the control of the laser gradation controller 113 in each of the intervals A-H, which are severally divided one display period of a pixel, thereby outputting the division signals to the laser light sources 1a, 1b, and 1c. In the switch section 21 of the present second embodiment, the switch section 21 is configured so that the switch SW8 may output a division signal of the luminance value 128, that the switch SW7 may output a division signal of the luminance value 64, that the switch SW6 may output a division signal of the luminance value 32, that the switch SW5 may output a division signal of the luminance value 16, that the switch SW4 may output a division signal of the luminance value 8, that the switch SW3 may output a division signal of the luminance value 4, that the switch SW2 may output a division signal of the luminance value 2, and that the switch SW1 may output a division signal of the luminance value 1.

The control section 22 includes, for example, a CPU 221, the image memory 112, the laser gradation controller 113, the position detection controller 114, the drive frequency controller 115, a gradation memory 222 as a storage section, a random number generation unit 223, a ROM 224, and the like.

The CPU 221 executes various programs stored in the ROM 224 according to the input signals input from the respective sections of the laser projector 200, and outputs output signals to the respective sections on the basis of the executed programs, thereby performing the integrated control of the whole operation of the laser projector 200.

The gradation memory 222 associates the luminance values of the respective 256 gradations with the values of the division signals corresponding to the intensities of the individual division gradations, which division signals are combined with each other for representing each of the 256 luminance values, and stores the luminance values and the values of the division signals therein.

The random number generation unit 223 has the function of generating a random number by, for example, software processing or hardware processing, and generates numerical values from one to eight in a random order on the basis of the control from the control section 22 in the execution of a signal output program 224a, which will be described later.

The ROM 224 includes a program storage area, and concretely, stores the determination program 117a, the signal output program 224a, and the like.

The signal output program 224a is a program, for example, for allowing the CPU 221 to realize the function of dividing the display period of each pixel into eight (n) intervals, and of sequentially outputting each of the division signals of the individual division gradations determined by the determination program 117a in each of the eight intervals to the laser light sources 1a, 1b, and 1c in an order by which the intensities of the division signals are randomly arranged.

The CPU 221 executes this signal output program 224a, thereby functioning as a signal outputting section.

To put it concretely, the CPU 221 reads an image signal from the image memory 112 to obtain the luminance value of each pixel. Then, the CPU 221 determines the respective division signals of the division gradations 1-8 corresponding to the obtained luminance values on the basis of the gradation memory 222.

Then, in each of the intervals A-H, which are severally divided one display period of a pixel, the CPU 221 makes the laser gradation controller 113 turn on and off the switches SW1-SW8 corresponding to the division signals to be output at the random order different to each of the pixels, and makes the laser gradation controller 113 output the respective division signals to the laser light sources 1a, 1b, and 1c.

In the laser projector 200 of the second embodiment, the intensity of each division gradation output in each of the eight intervals A-H is set to a 2 factorial value of a respectively different value here. To put it concretely, they are 2⁰ (= 1), 2¹ (= 2), 2² (= 4), 2³ (= 8), 2⁴ (= 16), 2⁵ (= 32), 2⁶ (= 64), and 2⁷ (= 128).

Furthermore, in the laser projector 200 of the second embodiment, the division signals of the individual division gradations output in the respective intervals A-H are sequentially output in the order by which the intensities of the division signals are randomly arranged.

To put it concretely, the CPU 221 outputs a control signal for making the random number generation unit 223 generate the numerical values from one to eight in a random order to the random number generation unit 223 at the time of scanning each pixel. Then, when the CPU 221 obtains the numerical value data from one to eight generated by the random number generation unit 223 in the random order, the CPU 221 turns on and off the switches SW1-SW8 of the switch section 21 so that the division signals of the division gradations 1-8 may be output in the same order as that of the numerical values.

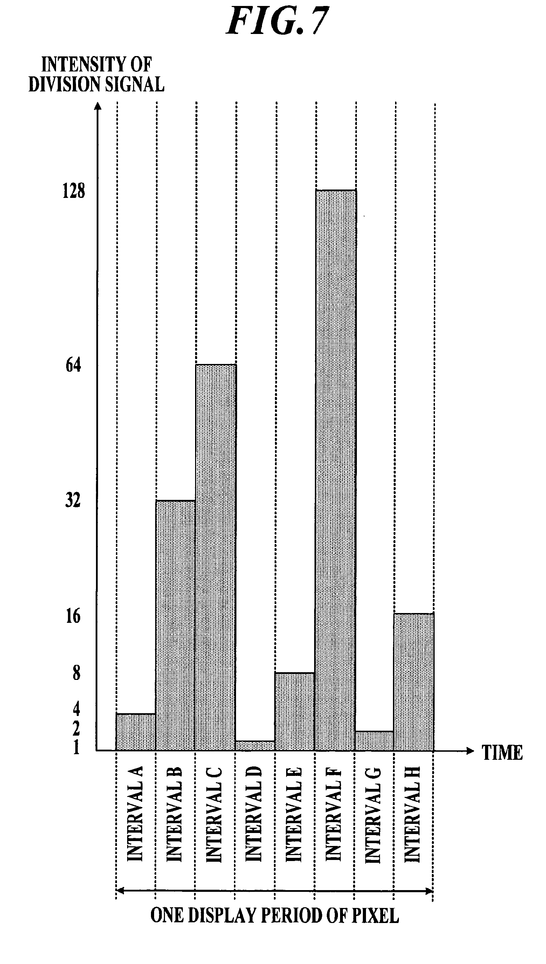

For example, when the random number generation unit 223 outputs the numerical values from one to eight in the order of "3 → 6 → 7 → 1 → 4 → 8 → 2 → 5," the CPU 221 outputs the division signals corresponding to the respective division gradations 1-8 in the order of division gradation 3 (luminance value 4) → division gradation 6 (luminance value 32) → division gradation 7 (luminance value 64) → division gradation 1 (luminance value 1) → division gradation 4 (luminance value 8) → division gradation 8 (luminance value 128) → division gradation 2 (luminance value 2) → division gradation 5 (luminance value 16) in the respective intervals A-H as shown in FIG. 7.

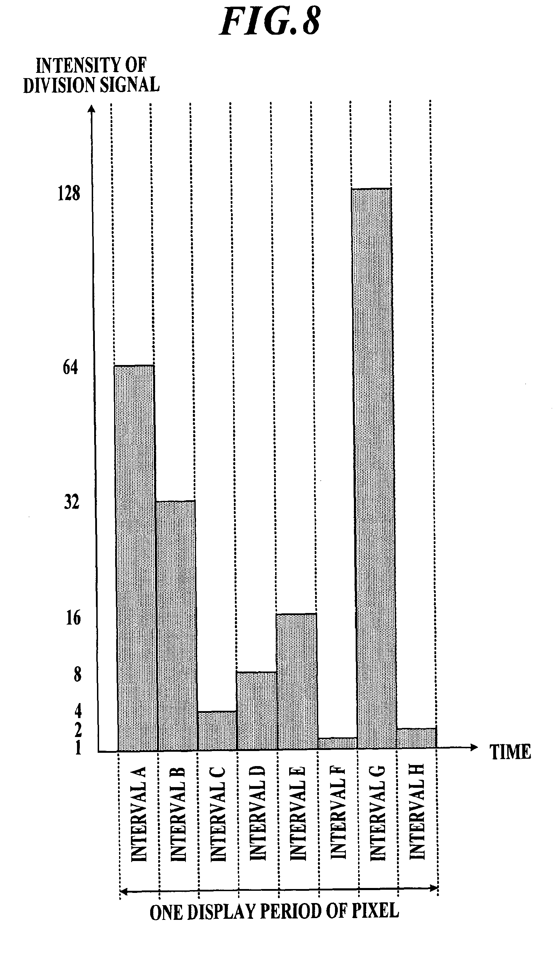

Moreover, for example, when the random number generation unit 223 outputs the numerical values from one to eight in the order of "7 → 6 → 3 → 4 → 5 → 1 → 8 → 2," the CPU 221 outputs the division signals corresponding to the respective division gradations 1-8 in the order of division gradation 7 (luminance value 64) → division gradation 6 (luminance value 32) → division gradation 3 (luminance value 4) → division gradation 4 (luminance value 8) → division gradation 5 (luminance value 16) → division gradation 1 (luminance value 1) → division gradation 8 (luminance value 128) → division gradation 2 (luminance value 2) in the respective intervals A-H as shown in FIG. 8.

The processing mentioned above is executed for every scan of a pixel, and then the division signals are sequentially output in the order in which intensities of the division signals are different from one another in each pixel.

Then, for example, when the CPU 221 obtains the numerical values from one to eight from the random number generation unit 223 in the order of "3 → 6 → 7 → 1 → 4 → 8 → 2 → 5" at the time of scanning a pixel of the luminance value 129, then the CPU 221 does not output any division signals in the intervals A-C; the CPU 221 turns on the switch SW1 in the interval D to output the division signal of the division gradation 1 (luminance value 1); the CPU 221 does not output any division signals in the interval E; the CPU 221 turns on the switch SW8 in the interval F to output the division signal of the division gradation 8 (luminance value 128); the CPU 221 does not output any division signals in the intervals G and H; and the CPU 221 turns off the other switches in each of the intervals A-H, thereby scanning the pixel of the luminance value 129.

Moreover, at the time of the scanning of the same pixel of the luminance value 129, when the CPU 221 obtains the numerical values from one to eight from the random number generation unit 223 in the order of "7 → 6 → 3 → 4 → 5 → 1 → 8 → 2," then the CPU 221 does not output any division signals in the intervals A-E; the CPU 221 turns on the switch SW1 in the interval F to output the division signal of the division gradation 1 (luminance value 1); the CPU 221 turns on the switch SW8 in the interval G to output the division signal of the division gradation 8 (luminance value 128); the CPU 221 does not output any division signals in the interval H; and the CPU 221 turns off the other switches in each of the intervals A-H, thereby scanning the pixel of the luminance value 129.

According to the laser projector 200 of the second embodiment described above, the gradation memory 222 associates the luminance values of the predetermined number of respective gradations with the division signals corresponding to the intensities of the individual division gradations, which division signals are combined with each other in order to represent the luminance values, and stores the luminance values and the division signals therein; the CPU 221 executes the determination program 117a to refer to the gradation memory 222, thereby determining the division signals of the individual division gradations corresponding to the luminance values of the respective pixels constituting an image; and the CPU 221 executes the signal output program 224a to divide the display period of each pixel into n intervals and to sequentially output each of the division signals of the individual division gradations determined by the determination program 117a in each of the n intervals to the light sources in the order in which the intensities of the division signals are randomly arranged. Moreover, the intensities of the individual division gradations are 2 factorial values of values different from one another.

That is, since the division signals of the respective division gradations output in the n respective intervals are output in the random order, the deviation of the luminance in each pixel is prevented, and the luminance in each pixel becomes more uniform. Consequently, in the laser projector 200 which divides the display period of a pixel into a plurality of intervals and divides the pixel into a plurality of regions, thereby performing a gradation representation, the uniformization of the luminance in each pixel can be achieved, and the image quality of the laser projector 200 can be improved.

Moreover, when the whole of a pixel is scanned by a light without performing the time-sharing of the display period of each pixel to render each of the pixels, then the signal of the electric current value corresponding to each of the gradations becomes necessary, and the accuracy of an electric current generation circuit is required. Moreover, the nonlinearity of the electric current-light output characteristic of a laser is required to be added into consideration, and consequently the control becomes complicated. On the other hand, since the present laser projector 200 is only required to generate the division signals corresponding to the respective division gradations to be output in the respective intervals, which are severally divided display periods of a pixel, and does not need to perform the control containing the examination of the electric current-light output characteristic of the laser, the configuration and control of the electric current generation circuit become easy. For example, when 256 gradations are represented, the related art technology is required to generate the signals of electric current values for 256 gradations. But when the display period of a pixel is divided into eight intervals A-H and the division signals of 2 factorial values (2⁰ to 2⁷), which are different from one another, are sequentially output in each of the eight intervals A-H in the present laser projector 200, then it is sufficient only to generate the division signals of the eight gradations, and 256 gradations can be represented with a simple configuration.

### (Second Modification)

Next, a laser projector of a second modification will be described.

In the laser projector of the first modification, an arbitrary interval among the eight divided intervals A-H is divided into a display interval and a non-display interval, and a division signal is output only in the display interval.

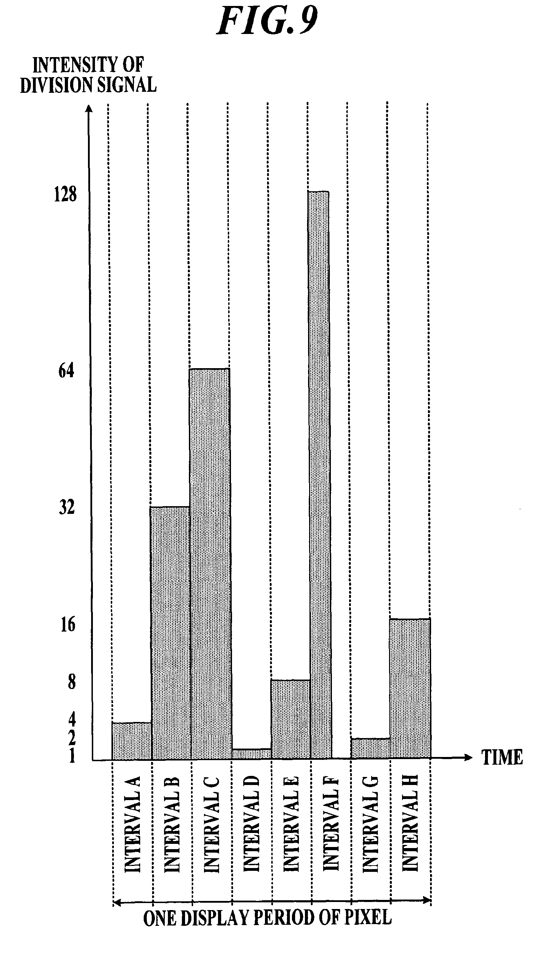

In the laser projector of the second modification, for example, similarly to the laser projector 200 of the second embodiment, in each of the divided eight intervals A-H, the division signals of the individual division gradations are sequentially output in the order in which the intensities of the division signals are randomly arranged (that is, for example, the luminance value 4 → the luminance value 32 → the luminance value 64 → the luminance value 1 → the luminance value 8 → the luminance value 128 → the luminance value 2 → the luminance value 16). Then, for example, the interval F, having the highest luminance value of the division signal to be output, is divided into the display interval and the non-display interval, and as shown in FIG. 9, the division signal is output only during the display interval in the interval F. The length of the non-display interval is set according to the amount of an overshoot that has been estimated in advance, and the overshoot can be complemented.

Incidentally, another interval in which an overshoot can be caused may be divided into a display interval and a non-display interval.

According to the laser projector of the second modification, an interval is divided into a display interval and a non-display interval, and the division signal of an individual division gradation determined by the execution of the determination program 117a is output only in the display interval. Consequently, a harmful influence owing to an overshoot, which can be generated at the time of the scanning of each pixel, can be prevented.

### (Third Embodiment)

Next, a laser projector of a third embodiment of the present invention will be described.

In the third embodiment, a laser projector 300 to display an image in 256 (predetermined number) gradations will be described as a laser projector to display an image of a predetermined number of gradations similarly to the first and second embodiments. Moreover, in the present laser projector 300, the number n is set to be five, and the 256 gradations are divided into five (n) division gradations to each of which the maximum luminance is individually set, and the display period of each pixel is set to be divided into five (n) intervals. Incidentally, in the following description, the five division gradations are referred to as "division gradations 1-5," and the five intervals are referred to as "intervals A-E."

Then, in each of the divided five intervals A-E, division signals corresponding to the five respective division gradations 1-5 are output, and 256 gradations are represented by the combinations of the division gradations 1-5.

Incidentally, the components duplicated with those of the first and second embodiments are denoted by the same reference numbers as those of the first and second embodiments, and their descriptions are omitted.

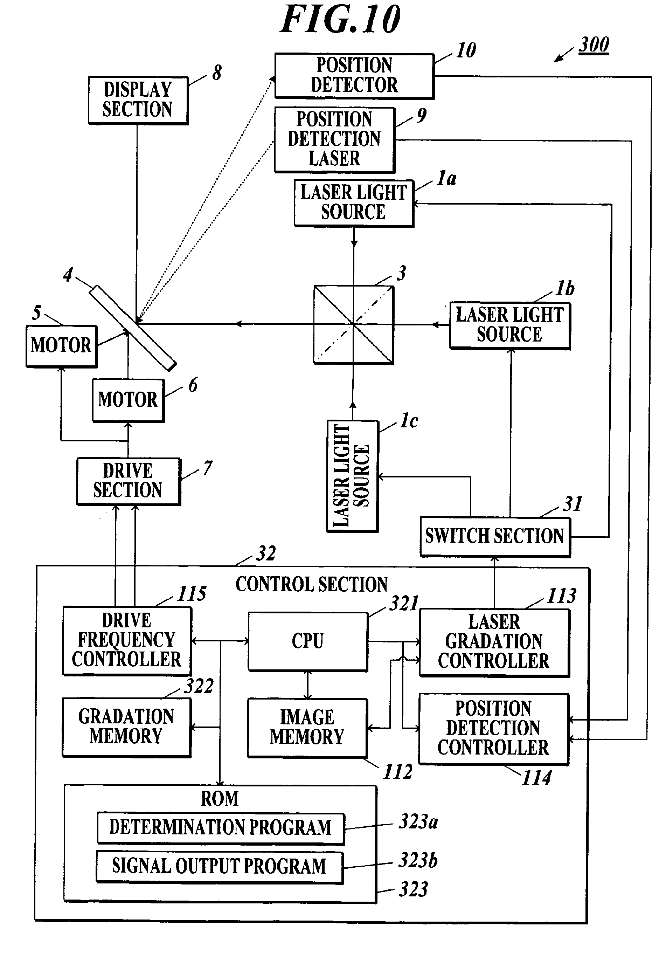

FIG. 10 is a block diagram showing the configuration of the principal part of the laser projector 300 of the third embodiment.

As shown in FIG. 10, the laser projector 300 of the third embodiment includes the three laser light sources 1a, 1b, and 1c, a switch section 31, the half mirror 3, the scanner mirror 4, the motors 5 and 6, the drive section 7, the display section 8, the position detection laser 9, the position detector 10, a control section 32, and the like.

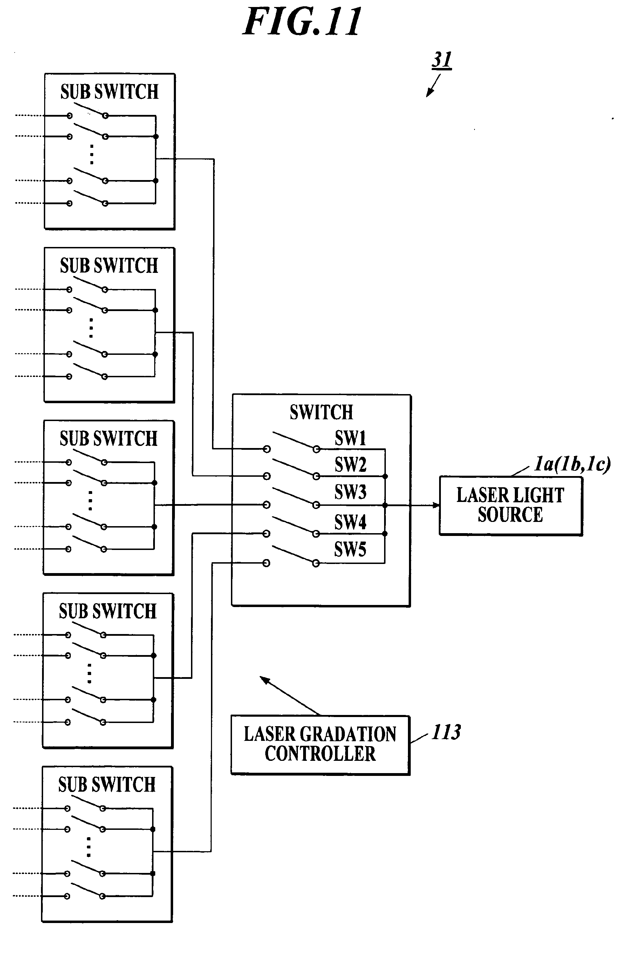

The switch section 31 includes, for example, as shown in FIG. 11, five switches SW1-SW5 and a plurality of sub switches to output division signals, and turns on and off the respective switches SW1-SW5 and the sub switches in conformity with the control of the laser gradation controller 113 in each of the intervals A-E, which are severally divided one display period of a pixel, thereby outputting the division signals to the laser light sources 1a, 1b, and 1c.

The control section 32 includes, for example, a CPU 321, the image memory 112, the laser gradation controller 113, the position detection controller 114, the drive frequency controller 115, a gradation memory 322 as a storage section, a ROM 323, and the like.

The CPU 321 executes various programs stored in the ROM 323 according to the input signals input from the respective sections of the laser projector 300, and outputs output signals to the respective sections on the basis of the executed programs, thereby performing the integrated control of the whole operation of the laser projector 300.

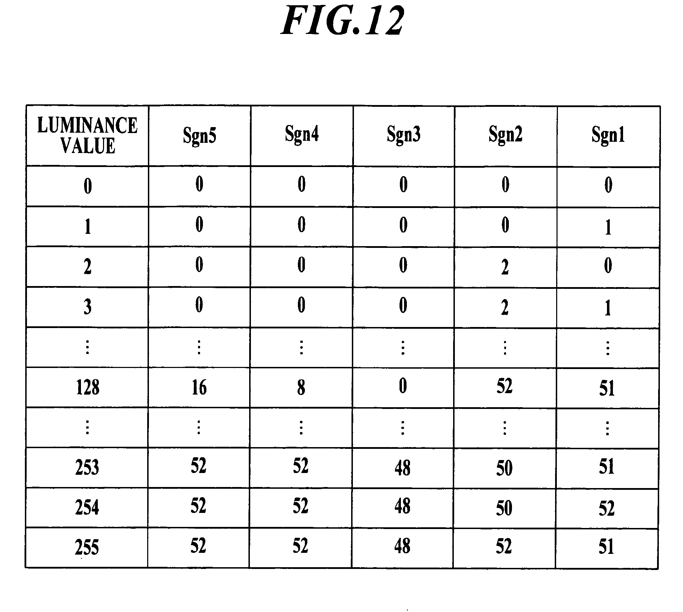

The gradation memory 322 associates the luminance values of the respective 256 gradations with the division signals corresponding to the intensities of the individual division gradations, which are combined with each other for representing the 256 respective luminance values, and stores the luminance values and the division signals therein, as shown in FIG. 12, for example.

For example, in the gradation memory 322 of FIG. 12, the division signals of the five values of "16, 8, 0, 52, and 52" are associated with the luminance value 128. Moreover, the division signals of the five values of "52, 52, 48, 50, and 42" are associated with the luminance value 254.

The ROM 323 includes a program storage area, and concretely, stores a determination program 323a, a signal output program 323b, and the like.

The determination program 323a is a program, for example, for allowing the CPU 321 to realize the function of referring to the gradation memory 322, thereby determining the division signal of the individual division gradation corresponding to the luminance value of each pixel constituting an image.

The CPU 321 executes this determination program 323a, thereby functioning as a determination section.

The signal output program 323b is a program, for example, for allowing the CPU 321 to realize the function of dividing the display period of each pixel into five (n) intervals and to sequentially output each of the division signals of the individual division gradations determined by the determination program 323a in each of the five intervals to the laser light sources 1a, 1b, and 1c.

The CPU 321 executes this signal output program 323b, thereby functioning as a signal outputting section.

To put it concretely, the CPU 321 reads an image signal from the image memory 112 to obtain the luminance value of each pixel. Then, the CPU 321 determines the respective division signals of the division gradations 1-5 corresponding to the obtained luminance values on the basis of the gradation memory 322.

Furthermore, in each of the intervals A-E, which are severally divided one display period of a pixel, the CPU 321 makes the laser gradation controller 113 turn on and off the switches SW1-SW5 and sub switches corresponding to the division signals to be output, thereby making the laser gradation controller 113 output the respective division signals to the laser light sources 1a, 1b, and 1c.

In the laser projector 300 of the third embodiment here, the division signals of a plurality of intensities can be set in each of the division gradations 1-5, and the intensities of the division signals of each of the division gradations 1-5 are set correspondingly to the luminance value of each pixel.

That is, the switch section 31 is configured to be able to output the division signals of the plurality of intensities from each of the switches SW1-SW5 by combining the control of the sub switches with the control of the respective switches SW1-SW5, and the switch section 31 outputs the output signals of the intensities that are set each time in each of the intervals A-E in one display period of a pixel.

To put it concretely, for example, in the interval A, the CPU 321 sets the intensity of a division signal to be output among the intensities of the luminance values 8, 16, 32, 36, 44, 48, 50, and 52; in the interval B, the CPU 321 sets the intensity of the division signal to be output among the luminance values 4, 8, 16, 32, 36, 44, 48, 50, and 52; in the interval C, the CPU 321 sets the intensity of the division signal to be output among the luminance values 4, 48, and 52; in the interval D, the CPU 321 sets the intensity of the division signal to be output among the luminance values 2, 4, 50, and 52; and in the interval E, the CPU 321 sets the intensity of the division signal to be output among the luminance values 1, 2, 3, 4, 51, and 52. Incidentally, an arbitrary value can be set as the intensity of the division signal that can be output in each of the intervals A-E according to the division number of a gradation, the intensities of the division signals allotted to the respective division gradations, and the like.

Then, for example, when the CPU 321 scans a pixel of a luminance value 128, then the CPU 321 sets the division signal to be output from the switch SW1 in the interval A to the luminance value "16," and turns on the switch SW1; the CPU 321 sets the division signal to be output from the switch SW2 in the interval B to the luminance value "8," and turns on the switch SW2; the CPU 321 does not output any division signals in the interval C; the CPU 321 sets the division signal to be output from the switch SW4 in the interval D to the luminance value "52," and turns on the switch SW4; the CPU 321 sets the division signal to be output from the switch SW5 in the interval E to the luminance value "52," and turns on the switch SW5; and the CPU 321 turns off the other switches in each of the intervals A-E, thereby scanning the pixel of the luminance 128.

Incidentally, when the maximum luminance of each division signal (division gradation) to be output in each of the intervals A-E is made to be more averaged value, then the luminance in a pixel becomes more uniformized, and the image quality is improved.

According to the laser projector 300 of the third embodiment described above, the gradation memory 322 associates the luminance values of the predetermined number of respective gradations with the division signals corresponding to the intensities of the individual division gradations, which division signals are combined with each other in order to represent the luminance values, and stores the luminance values and the division signals therein; the CPU 321 executes the determination program 323a to refer to the gradation memory 322, thereby determining the division signals of the individual division gradations corresponding to the luminance values of the respective pixels constituting an image; and the CPU 321 executes the signal output program 323b to divide the display period of each pixel into n intervals and to sequentially output each of the division signals of the individual division gradations determined by the determination program 323a in each of the n intervals to the light sources. Moreover, the division signals of the plurality of intensities can be set in the individual division gradations, and the intensities of the division signals of the respective division gradations are set correspondingly to the luminance values of each pixel.

That is, since the division signals of the division gradations of the values set each time are output in the respective n intervals, the deviation of the luminance in each pixel is prevented and the luminance in each pixel becomes more uniform in comparison with the luminance in the case where the division signals are output in the order by which the intensities of the division signals are arranged by the ascending order or the descending order. Consequently, in the laser projector 300 which divides the display period of a pixel into a plurality of intervals and divides the pixel into a plurality of regions, thereby performing a gradation representation, the uniformization of the luminance in each pixel can be achieved, and the image quality of the laser projector 300 can be improved.

Moreover, when the maximum luminance of each of the division gradations output in each of the intervals A-E is made to be the more averaged values in the present laser projector 300, then the luminance in the pixel can be more uniformized, and the image quality of the laser projector 300 can be more improved. Moreover, the present laser projector 300 can be configured without using any highly accurate electric current generation circuit.

Incidentally, the scope of the present invention is not limited to the aforesaid embodiments, but various improvements and changes of design may be performed without departing from the sprit and scope of the present invention.

For example, although the cases of dividing the display period of a pixel into the equally-spaced intervals have been described in the aforesaid embodiments, the intervals may be divided into the ones having time widths different from one another. Moreover, the gradation representation may be performed by combining the time widths of the intervals and the intensities of the division signals in the respective intervals together.

According to an aspect of the preferred embodiments of the present invention, there is provided a laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in a predetermined order which is other than an order in which the intensity is arranged by an ascending order or by a descending order, in each of the intervals.

According to another aspect of the preferred embodiments of the present invention, there is provided a laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other,
   each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in an order in which the intensity is randomly arranged, in each of the intervals.

Preferably, the signal output section divides at least one of the intervals into a display interval and a non-display interval, and outputs the division signal of each of the division gradations, determined by the determination section, only in the display interval.

Preferably, the intensity of each of the division gradations is a 2 factorial value, the intensities having a different value from one another.

According to still another aspect of the preferred embodiments of the present invention, there is provided a laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other,
   each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in a predetermined order which is other than an order in which the intensity is arranged by an ascending order or by a descending order, in each of the intervals, wherein
the intensity of each of the division gradations is a 2 factorial value, the intensities having a different value from one another, and wherein
the signal output section divides at least one of the intervals into a display interval and a non-display interval, and outputs the division signal of each of the division gradations, determined by the determination section, only in the display interval.

According to still another aspect of the preferred embodiments of the present invention, there is provided a laser projector to display an image having a predetermined number of gradations by a combination of n division gradations, each division gradation being set with a maximum luminance, where n is an integer of not less than 3, the laser projector comprising:
a storage section to store a luminance value of each of the predetermined number of the gradations, and division signals in a state of being associated with each other,
   each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source, in each of the intervals, wherein
in each of the division gradations, the division signals of a plurality of intensities are set, and the intensity of the division signal of each of the division gradations is set so as to correspond to the luminance value of the each pixel.

According to the preferred embodiments of the present invention, in a laser projector to display an image of a predetermined number of gradations by the combination of n (n is an integer of two or more) division gradations the maximum luminance of which is individually set, a storage section associates the luminance values of the predetermined number of respective gradations with division signals corresponding to the intensities of the individual division gradations, which division signals are combined with each other in order to represent the luminance values, to store the luminance values and the division signals; a determination section referrers to the storage section to determine the division signals of the individual division gradations corresponding to the luminance values of the respective pixels constituting the image; and a signal outputting section divides the display period of each of the pixels into n intervals to sequentially output each of the division signals of the individual division gradations determined by the determination section to light sources in a predetermined order other than the order by which the intensities are arranged by an ascending order or a descending order in each of the intervals.

That is, since the division signals of the respective division gradations to be output in the respective n intervals are not output in the order of the intensities of the descending order or the ascending order, the deviation of luminance in each pixel can be prevented, and consequently the luminance in each pixel becomes more uniform. In a laser projector to divide the display period of a pixel into a plurality of intervals and to divide the pixel into a plurality of regions, thereby performing a gradation representation, it consequently becomes possible to achieve the uniformization of luminance in each pixel and to improve the image quality of the laser projector.

The entire disclosure of Japanese Patent Application No. 2008-013864 filed on January 24, 2008 including description, claims, drawings, and abstract are incorporated herein by reference in its entirety.

Although various exemplary embodiments have been shown and described, the invention is not limited to the embodiments shown. Therefore, the scope of the invention is intended to be limited solely by the scope of the claims that follow.

## Claims

1. A laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in a predetermined order which is other than an order in which the intensity is arranged by an ascending order or by a descending order, in each of the intervals.

2. A laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in an order in which the intensity is randomly arranged, in each of the intervals.

3. The laser projector according to claim 1 or 2, wherein the signal output section divides at least one of the intervals into a display interval and a non-display interval, and outputs the division signal of each of the division gradations, determined by the determination section, only in the display interval.

4. The laser projector according to any one of claims 1 to 3, wherein the intensity of each of the division gradations is a 2 factorial value, the intensities having a different value from one another.

5. A laser projector to display an image having a predetermined number of gradations by a combination of n division gradations, each division gradation being set with a maximum luminance, where n is an integer of not less than 2, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source in a predetermined order which is other than an order in which the intensity is arranged by an ascending order or by a descending order, in each of the intervals, wherein
the intensity of each of the division gradations is a 2 factorial value, the intensities having a different value from one another, and wherein
the signal output section divides at least one of the intervals into a display interval and a non-display interval, and outputs the division signal of each of the division gradations, determined by the determination section, only in the display interval.

6. A laser projector to display an image having a predetermined number of gradations by a combination of n division gradations, each division gradation being set with a maximum luminance, where n is an integer of not less than 3, the laser projector comprising:
a storage section to store a luminance value of each of the predetermined number of the gradations, and division signals in a state of being associated with each other, each of the division signals corresponding to an intensity of each of the division gradations, and the division gradations being combined with each other so as to represent the luminance value;
a determination section to determine the division signal of each of the division gradations corresponding to the luminance value of each pixel which constitutes the image, by referring to the storage section; and
a signal output section to divide a display period of the each pixel into n intervals, and to sequentially output the division signal of each of the division gradations, determined by the determination section, to a light source, in each of the intervals, wherein
in each of the division gradations, the division signals of a plurality of intensities are set, and the intensity of the division signal of each of the division gradations is set so as to correspond to the luminance value of the each pixel.
